# EUROPÄISCHE PATENTSCHRIFT

(11) **EP 1 602 452 B1**
(45) Veröffentlichungstag und Bekanntmachung des Hinweises auf die Patenterteilung: **05.12.2007**
(21) Anmeldenummer: 05103997.2
(22) Anmeldetag: 12.05.2005
(51) Int. Cl.: B25D 17/08

(54) **Einsteckende für ein drehendes und/oder schlagendes Werkzeug**
Shank for a percussive and/or rotary tool
Tige pour un outil rotatif et/ou à percussion

(30) Priorität: 02.06.2004 DE 102004026850
(43) Veröffentlichungstag der Anmeldung: 07.12.2005
(73) Patentinhaber: HILTI Aktiengesellschaft, 9494 Schaan (LI)
(72) Erfinder: Kleine, Werner, 28832, Achim (DE); Britten, Werner, 66125, Saarbrücken (DE)
(74) Vertreter: Wildi, Roland

(56) Entgegenhaltungen:
- EP-A- 0 955 131
- DE-A1- 3 429 419
- DE-A1- 3 716 915
- DE-A1- 4 307 050
- US-A- 4 047 722

## Beschreibung

Die Erfindung bezeichnet ein Einsteckende für ein zumindest teilweise drehend und/oder schlagend angetriebenes Werkzeug, wie einen Bohrmeissel, Meissel oder eine Schneidbohrkrone zur Bearbeitung von Gestein, Beton oder Mauerwerk.

Üblicherweise weist ein drehend und/oder schlagend angetriebenes Werkzeug ein sich längs einer Achse erstreckendes Einsteckende für eine drehende und/oder schlagende Handwerkzeugmaschine auf. Zur wahlfreien Verwendung einer vielfältigen Werkzeugpalette sollte die Schnittstelle zwischen dem Einsteckende des Werkzeugs und der Werkzeugaufnahme der Handwerkzeugmaschine zumindest innerhalb bestimmter Leistungsklassen kompatibel sein. Die derzeit bei Bohrhammersystemen weltweit meistgenutzten, praktisch standardisierten Einsteckenden und zugeordneten Werkzeugaufnahmen beziehen sich auf die DE2551125A1 und die DE3716915A1, welche eine werkzeugseitige, zylindermantelförmige Führungsfläche, zum freien Stirnende hin axial geschlossene Verriegelungsnuten und zum freien Stirnende hin axial offene, trapezförmige Drehmitnahmenuten aufweisen, wobei zumindest ein radial versetzbarer Verriegelungskörper der zugeordneten Werkzeugaufnahme in eine Verriegelungsnut eingreifen und die axiale Beweglichkeit des Werkzeugs in der Werkzeugaufnahme begrenzen kann.

Die praktisch standardisierten Einsteckenden und Werkzeugaufnahmen nach der DE2551125A1 weisen einen Führungsdurchmesser von 10 mm auf, wobei je genau zwei gleichförmige, diametral gegenüberliegende Verriegelungsnuten und Drehmitnahmenuten symmetrisch umfänglich verteilt sind. An die bezüglich der Verriegelungsnuten geringfügig längeren Drehmitnahmenuten schliesst sich werkzeugseitig eine bis zum werkzeugseitigen Ende des Einsteckendes erstreckende Führungsfläche an, welche nicht zur Drehmomentübertragung beiträgt. Diese Einsteckenden waren ursprünglich für einen Bohrerdurchmesser bis zu 17 mm ausgelegt und sind somit dem Bereich der kleinen, leistungsschwächeren Bohrhämmer mit einer Leistung kleiner 650 W zuzuordnen. Die zunehmend leistungsstärkeren Handwerkzeugmaschinen, insbesondere Bohrhämmer, gestatten es jedoch inzwischen, in bestimmten Betriebsmodi hohe Drehmomente auf ein Werkzeug zu übertragen. Inzwischen hat sich eine Erweiterung des praktischen Einsatzbereiches dieser Bohrhämmer bis zu einem Bohrerdurchmesser von 30 mm ergeben. Zudem werden beim Entfernen eines Werkzeugs aus dem Werkstück, insbesondere bei im Bohrloch verklemmten Werkzeugen, vom Nutzer mittels einer in sich arretierten Handwerkzeugmaschine hohe Drehmomente auf das Werkzeug aufgebracht. Es hat sich gezeigt, dass Bohrerdurchmesser über 17 mm vermehrt zu Schädigungen führen, konkret zum Bruch des Einsteckendes im Bereich der Verriegelungsnut und zu Zerstörungen innerhalb der Werkzeugaufnahme. Diese Brüche sind umso ärgerlicher, als das abgebrochene Ende im Inneren des Bohrhammers verbleibt und nur durch eine Demontage des Vorderteils des Bohrhammers aus der Werkzeugaufnahme entfernt werden kann. Selbst in den Fällen, in denen es beim Einsatz von Bohrern größerer Bohrerdurchmesser nicht zum Bruch kommt, zeigt sich eine plastische Deformation am Einsteckende, die zu einem unverhältnismäßig grossen Verschleiss der Werkzeugaufnahme führt, weswegen diese Werkzeuge oftmals nur schwer aus der Werkzeugaufnahme entfernt werden können.

Die ebenfalls praktisch standardisierten Einsteckenden und Werkzeugaufnahmen nach der DE3716915A1 weisen einen Führungsdurchmesser von 18 mm auf, wobei genau zwei gleichförmige, diametral gegenüberliegende Verriegelungsnuten vorhanden sind, zwischen diesen in einer Schnitthälfte genau eine und in der anderen Schnitthälfte genau zwei Drehmitnahmenuten symmetrisch angeordnet sind. Diese Einsteckenden sind für leistungsfähigere, grössere Bohrhämmer und der Übertragung höherer Drehmomente ausgelegt, wobei die in den obenstehenden Absätzen erläuterten Probleme bei noch höheren Leistungsklassen bzw. Drehmomenten naturgemäss ebenfalls auftreten. Werkzeuge mit einem Führungsdurchmesser von 18 mm, aber einem mit kleiner 14 mm wesentlich kleineren Bohrerdurchmesser weisen jedoch eine schlechte Schlagimpulsübertragung auf. Zudem wären derartige, unproportionierte Werkzeuge in der Herstellung unökonomisch.

Die bei derartigen Einsteckenden auftretenden Belastungen setzen sich wie folgt zusammen: Zum einen erfolgt eine Belastung des Einsteckendes durch die Schlagenergie des Bohrhammers, zum anderen erfolgt eine, durch das an der Schneide auftretende Drehmoment bestimmte, von den Drehkeilen der Werkzeugaufnahme ausgehende Torsionsbelastung, die sich auf die Drehmitnahmenuten des Einsteckendes überträgt. Diese Drehmomentbelastung ist dann besonders hoch, wenn es z. B. zum Verkeilen der Schneide beim Armierungsbohren kommt. Als zusätzliche Belastung tritt im Fall des Verkeilens in Armierung, beispielsweise beim Versuch des Zurückziehens des Bohrhammers, zudem noch eine von dem Verriegelungskörper auf das Axialverriegelungsende der Verriegelungsnut einwirkende Belastung auf diesen gefährdeten, hinteren Querschnitt der Verriegelungsnut auf. Die langjährigen Erfahrungen haben nunmehr gezeigt, dass durch diese kombinierten, mehrachsigen Belastungen besonders der im Bereich des Axialverriegelungsendes angeordnete Querschnitt gefährdet ist. Die bruchmechanische Ursache dessen liegt vermutlich in diesem am Axialverriegelungsende lokal ausgeprägten, mehrachsigen Spannungszustand, der über die Querkontraktion eine lokale Versteifung bewirkt, welche einen bevorzugten Rissinitiator darstellt und somit die Dauerfestigkeit des wechselbeanspruchten Einsteckendes beschränkt.

Nach der US4655651 weist ein Einsteckende eine werkzeugseitige, zylindermantelförmige Führungsfläche und drei zum freien Stirnende hin axial offene Spitznuten auf, die längs dieser mehrere axial versetzte Verriegelungsnuten mit je einer vom freien Stirnende abgewandten Verriegelungsschulter integriert ausbilden. Dabei dienen die drei, jeweils mit einem Schenkelwinkel von exakt 120° ausgebildeten, Spitznuten als Ausnehmung für die Spannbacken eines Dreibackenfutters. Derartig schräge, 60° zum Radius geneigte Schenkel sind für hohe Drehmomente, wie sie insbesondere bei Werkzeugblockaden auftreten, ungeeignet. Zudem verringern die längs der Spitznuten integrierten Verriegelungsnuten die zur Drehmomentübertragung verfügbare Schenkelfläche.

Nach der EP0955131 weist ein derartiges Einsteckende gemäß dem Oberbegriff des Anspruchs 1, welches sich längs der Achse innerhalb eines maximalen Führungsdurchmessers erstreckt, zwei gegenüberliegende, an einem Axialverriegelungsende mit einer vom freien Stirnende abgewandten Verriegelungsschulter versehene, Verriegelungsnuten auf, wobei bezüglich beider Verriegelungsnuten jeweils eine zur jeweiligen Verriegelungsschulter werkzeugseitig axial projizierte Endschulter vorhanden ist. Zu den Verriegelungsnuten wechselseitig tangential versetzt sind zwei, zum freien Stirnende hin offene, Drehmitnahmenuten mit einer tangentialen Nutenbreite und mit zumindest einer sich über eine Kontaktlänge erstreckende Tangentialkraftkontaktfläche, wobei die axial projizierte Endschulter dem Axialverriegelungsende bei einer Länge, welche das Dreifache des Führungsdurchmessers beträgt, werkzeugseitig vorgelagert ist.

Die Aufgabe der Erfindung besteht in der Realisierung eines zur schädigungsarmen Übertragung hoher Drehmomente sowie optimaler Schlagimpulsübertragung ausgelegten Einsteckendes.

Die Aufgabe wird im Wesentlichen durch die Merkmale des Anspruchs 1 gelöst. Vorteilhafte Weiterbildungen ergeben sich aus den Unteransprüchen.

So weist ein Einsteckende eines zumindest teilweise längs einer Achse drehend und/oder schlagend angetriebenen Werkzeugs, welches sich längs der Achse innerhalb eines maximalen Führungsdurchmessers erstreckt sowie zumindest zwei gegenüberliegende, an einem Axialverriegelungsende mit einer vom freien Stirnende abgewandten Verriegelungsschulter versehene, Verriegelungsnuten auf, wobei bezüglich beider Verriegelungsnuten jeweils eine zur jeweiligen Verriegelungsschulter werkzeugseitig axial projizierte Endschulter vorhanden ist, Zu den Verriegelungsnuten wechselseitig tangential versetzt sind zumindest zwei, zum freien Stirnende hin offene, Drehmitnahmenuten mit einer tangentialen Nutenbreite und mit zumindest einer sich über eine Kontaktlänge erstreckende Tangentialkraftkontaktfläche, wobei die axial projizierte Endschulter dem Axialverriegelungsende bei einer Länge, welche zumindest das Dreifache des Führungsdurchmessers beträgt, werkzeugseitig vorgelagert ist, wobei die Endschulter von einem werkzeugseitigen Nutende der Drehmitnahmenuten zumindest um das 1.5 - fache des Führungsdurchmessers axial werkzeugseitig versetzt ist.

Durch die werkzeugseitig möglichst weit vorgelagerten Endschultern der Verriegelungsnuten erfolgen deren Querschnittsänderungen erst nahe dem werkzeugseitigen Ende des Einsteckendes, wodurch zumindest bei Werkzeugen mit einem Schaftdurchmesser kleiner oder gleich dem Führungsdurchmesser ein die akustische Impedanz ändernder und somit die Schlagimpulsübertragung störender Reflexionsbereich einer Länge von mindestens dem e-fachen des Führungsdurchmessers vermieden wird, wobei e die Basis des natürlichen Logarithmus ist. Insbesondere sind dadurch höhere Drehmomente bei geringerem Führungsdurchmesser schädigungsarm einprägbar, wodurch das Schlagimpulsverhalten bei kleinen Bohrerdurchmessern verbessert wird. Die Endschulter ist von einem werkzeugseitigen Nutende der Drehmitnahmenuten zumindest um das 1.5-fache des Führungsdurchmessers axial werkzeugseitig versetzt, wodurch diese Querschnittsänderung zum werkzeugseitigen Nutende der tangential beanspruchten Drehmitnahmenuten hinreichend weit axial beabstandet ist, um am werkzeugseitigen Ende des Lastangriffsbereiches einen mehrachsigen Spannungszustand zu vermeiden.

Vorteilhaft ist eine axiale Führungslänge zwischen einem werkzeugseitigen Führungsende mit dem Führungsdurchmesser bis zu der Endschulter beider Verriegelungsnuten kleiner dem 1.5-fachen des Führungsdurchmessers, wodurch bei gutem Schlagimpulsübertragungsverhalten eine zur werkzeugseitigen Dichtung hinreichend lange Führungslänge realisiert ist..

Vorteilhaft verläuft zumindest über die Kontaktlänge die Tangentialkraftkontaktfläche sowohl parallel als auch senkrecht zur Achse, wodurch die Flächennormale der Tangentialkraftkontaktfläche exakt tangential orientiert ist und somit keine verschleissbegünstigenden Scherkräfte bei der Einprägung des Drehmoments induziert werden.

Vorteilhaft beträgt zumindest über die Kontaktlänge die radiale Nutentiefe jeder Drehmitnahmenut zwischen dem 0.5 bis 1.0 fachen der Nutbreite, wodurch hohe Drehmomente ohne wesentliche Schwächung des Querschnitts bei hinreichender Biegesteifigkeit der in die Drehmitnahmenut eingreifenden Drehmitnahmestege der Werkzeugaufnahme einprägbar sind.

Vorteilhaft sind zumindest drei Drehmitnahmenuten vorhanden, die weiter vorteilhaft spiegelsymmetrisch angeordnet sind, wodurch ein höheres Drehmoment einprägbar ist.

Vorteilhaft ist die zur jeweiligen Verriegelungsschulter der beiden Verriegelungsnuten werkzeugseitig axial projizierte Endschulter von jeweils einer, werkzeugseitig von den beiden Verriegelungsnuten axial beabstandeten und von diesen getrennten, weitere Verriegelungsnut ausgebildet, wodurch dazwischen zur Begrenzung der axialen Beweglichkeit des Werkzeugs in der Schlagwerkzeugaufnahme dienende Zwischenschultern realisiert sind.

Vorteilhaft weisen die Verriegelungsnut und die weitere Verriegelungsnut einen gleichen Querschnitt auf, wodurch in beiden Verriegelungsnuten ein im Querschnitt gleichförmiger Verriegelungskörper der Schlagwerkzeugaufnahme zweckentsprechend verwendbar ist.

Die Erfindung wird bezüglich eines vorteilhaften Ausführungsbeispiels näher erläutert mit:
Fig. 1 a als Einsteckende mit Fig. 1 b als vergrösserter Querschnitt
Fig. 2a als Variante mit Fig. 2b als vergrösserter Querschnitt

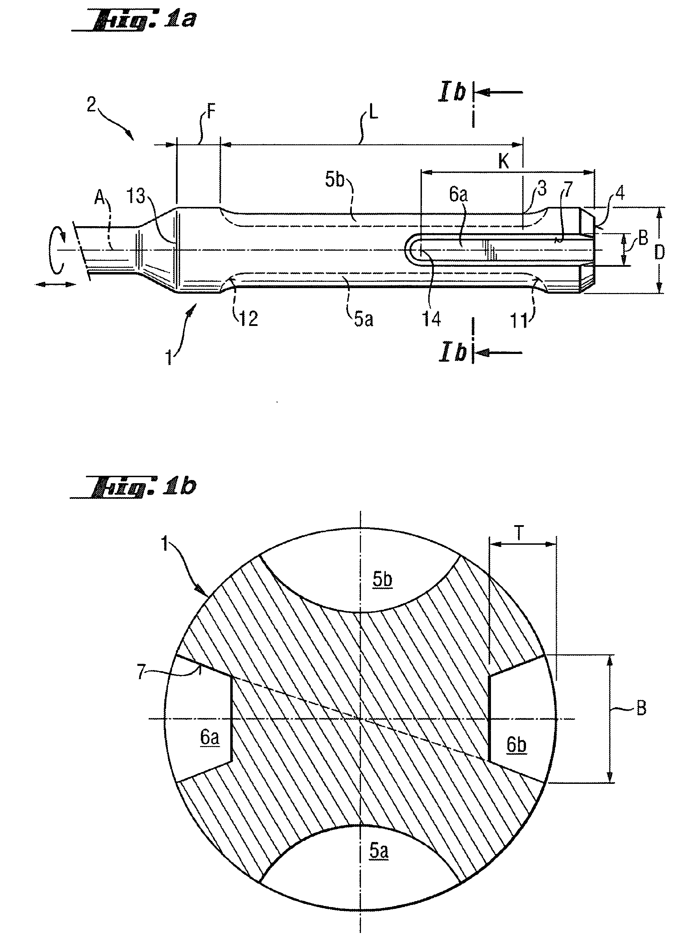

Nach den Fig. 1a, Fig. 1 b weist ein zweizählig rotationssymmetrisches Einsteckende 1 eines längs einer Achse A drehend und schlagend angetriebenen Werkzeugs 2, welches sich längs der Achse A mit einem maximalen Führungsdurchmessers D erstreckt, jeweils genau zwei gleiche, diametral angeordnete, an einem Axialverriegelungsende 3 mit einer vom freien Stirnende 4 abgewandten Verriegelungsschulter 11 versehene, Verriegelungsnuten 5a, 5b auf. Zu diesen wechselseitig tangential versetzt sind zwei, zum freien Stirnende 4 hin offene Drehmitnahmenuten 6a, 6b mit einer tangentialen Nutenbreite B und mit einer sich über eine Kontaktlänge K erstreckenden, sowohl parallel als auch senkrecht zur Achse A verlaufenden, Tangentialkraftkontaktfläche 7. Bezüglich beider Verriegelungsnuten 5a, 5b ist jeweils eine zur jeweiligen Verriegelungsschulter 11 werkzeugseitig axial projizierte Endschulter 12 vorhanden, die dem Axialverriegelungsende 3 bei einer Länge L, welche das 3.5-fache des Führungsdurchmessers D beträgt, werkzeugseitig vorgelagert ist. Zwischen einem werkzeugseitigen Führungsende 13 mit dem Führungsdurchmesser D bis zu der werkzeugseitigen Endschulter 12 beider Verriegelungsnuten 5a, 5b ist eine axiale Führungslänge F von der Hälfte des Führungsdurchmessers D ausgebildet. Die Endschulter 12 ist von einem werkzeugseitigen Nutende 15 der Drehmitnahmenut 6a um mehr als das Doppelte des Führungsdurchmessers D axial werkzeugseitig versetzt. Über eine Kontaktlänge K vom Doppelten des Führungsdurchmessers D hin sind beide Drehmitnahmenuten 6a, 6b mit einer konstanten Nutenbreite B von einem Drittel des Führungsdurchmessers D ausgebildet. Eine radiale Nutentiefe T beider Drehmitnahmenuten 6a, 6b beträgt über die gesamte Kontaktlänge K die Hälfte der Nutbreite B.

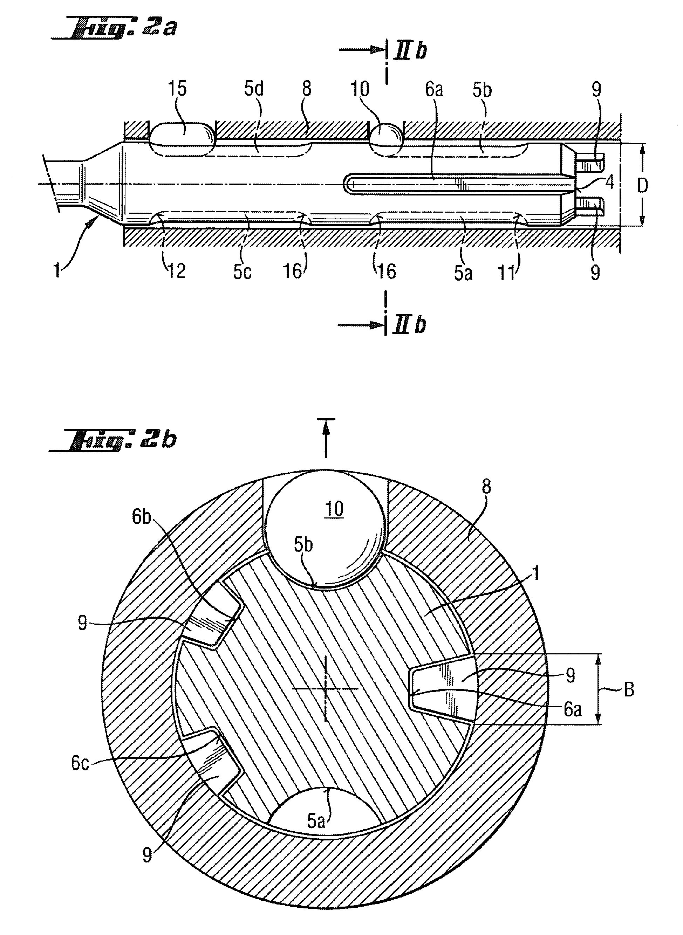

Nach den Fig. 2a, 2b ist ein spiegelsymmetrisches Einsteckende 1 in eine zugeordnete, angedeutete Schlagwerkzeugaufnahme 8 mit Drehmitnahmemitteln 9 in Form von drei radial nach innen einkragenden, werkzeugseitig vorgelagerten Drehmitnahmestegen und zwei radial versetzbaren Verriegelungsmittel in Form einer Verriegelungskugel 10 und einer axialen Kugelwalze 15 eingeführt. Dazu sind die Drehmitnahmenuten 6 a bis 6c mit einer, breiter einem Fünftel des Führungsdurchmessers D betragenden, konstanten Nutenbreite B maschinenseitig bis zum freien Stirnende 4 hin offen. Die drei spiegelsymmetrisch angeordneten Drehmitnahmenuten 6a, 6b, 6c sind von den beiden diametral versetzten Verriegelungsnuten 5a, 5b symmetrisch umfänglich versetzt. Die zur jeweiligen Verriegelungsschulter 11 der beiden Verriegelungsnuten 5a, 5b werkzeugseitig axial projizierte Endschulter 12 ist von jeweils einer, werkzeugseitig von den beiden Verriegelungsnuten 5a, 5b axial beabstandeten und von diesen getrennten, weiteren Verriegelungsnuten 5c, 5d gleichen Querschnitts ausgebildet, wobei axial zwischen diesen Zwischenschultern 16 ausgebildet sind.

## Patentansprüche

1. Einsteckende eines zumindest teilweise längs einer Achse (A) drehend und/oder schlagend angetriebenen Werkzeugs (2), welches sich längs der Achse (A) innerhalb eines maximalen Führungsdurchmessers (D) erstreckt sowie zumindest zwei gegenüberliegende, an einem Axialverriegelungsende (3) mit einer vom freien Stirnende (4) abgewandten Verriegelungsschulter (11) versehene, Verriegelungsnuten (5a, 5b) mit jeweils einer zur jeweiligen Verriegelungsschulter (11) werkzeugseitig axial projizierten Endschulter (12) und zu den Verriegelungsnuten (5a, 5b) wechselseitig tangential versetzt zumindest zwei, zum freien Stirnende (4) hin offene Drehmitnahmenuten (6a, 6b) mit einer tangentialen Nutenbreite (B) und mit zumindest einer sich über eine Kontaktlänge (K) erstreckende Tangentialkraftkontaktfläche (7) aufweist, wobei die Endschulter (12) dem Axialverriegelungsende (3) bei einer Länge (L), welche zumindest das Dreifache des Führungsdurchmessers (D) beträgt, werkzeugseitig vorgelagert ist, **dadurch gekennzeichnet, dass** die Endschulter (12) von einem werkzeugseitigen Nutende (14) der Drehmitnahmenuten (6a, 6b) zumindest um das 1.5-fache des Führungsdurchmessers (D) axial werkzeugseitig versetzt ist.

2. Einsteckende nach Anspruch 1, **dadurch gekennzeichnet, dass** eine axiale Führungslänge (F) zwischen einem werkzeugseitigen Führungsende (13) mit dem Führungsdurchmesser (D) bis zu der Endschulter (12) beider Verriegelungsnuten (5a, 5b) kleiner dem 1.5-fachen des Führungsdurchmessers (D) ist.

3. Einsteckende nach einem der Ansprüche 1 oder 2, **dadurch gekennzeichnet, dass** die Tangentialkraftkontaktfläche (7) zumindest über die Kontaktlänge (K) sowohl parallel als auch senkrecht zur Achse (A) verläuft.

4. Einsteckende nach einem der vorherigen Ansprüche, **dadurch gekennzeichnet, dass** zumindest über die Kontaktlänge (K) eine radiale Nutentiefe (T) jeder Drehmitnahmenut (6a, 6b, 6c) zwischen dem 0.5 bis 1.0 fachen der Nutbreite (B) beträgt.

5. Einsteckende nach einem der vorherigen Ansprüche, **dadurch gekennzeichnet, dass** zumindest drei Drehmitnahmenuten (6a, 6b, 6c) vorhanden sind, die optional spiegelsymmetrisch angeordnet sind.

6. Einsteckende nach einem der vorherigen Ansprüche, **dadurch gekennzeichnet, dass** die zur jeweiligen Verriegelungsschulter (11) der beiden Verriegelungsnuten (5a, 5b) werkzeugseitig axial projizierte Endschulter (12) von jeweils einer, werkzeugseitig von den beiden Verriegelungsnuten (5a, 5b) axial beabstandeten und von diesen getrennten, weiteren Verriegelungsnuten (5c, 5d) ausgebildet ist.

7. Einsteckende nach Anspruch 6, **dadurch gekennzeichnet, dass** die Verriegelungsnuten (5a, 5b) und die weiteren Verriegelungsnuten (5c, 5d) einen gleichen Querschnitt aufweisen.

## Claims

1. Shank of a driven tool (2) that at least partially rotates around and/or is percussive along an axis (A), the said shank extending along the axis (A) with an optimal guide diameter (D) and at least two opposite catch grooves (5a, 5b) that, on an axial catch end (3), have a catch shoulder (11) that faces away from the free front end (4), the said catch grooves (5a, 5b) in each case having an end shoulder (12) projecting axially in relation to the given catch shoulder (11) and at least, in relation to the catch grooves (5a, 5b), two alternately tangentially shifted rotary lock-in grooves (6a, 6b) that are open towards the free front end (4) and that have a tangential groove width (B), and with at least one tangential-force contact face (7) extending over a contact length (K), whereby the end shoulder (12) is located, on the tool-side, before the locking end (3), by a length (L) that is at least three times the guide diameter (D), **characterized in that** the end shoulder (12) is axially shifted, towards the tool-side, away from a tool-side groove-end (14) of the rotary lock-in grooves (6a, 6b), by at least 1.5 times the length of the guide diameter (D).

2. Shank in accordance with claim 1 or 2, **characterized in that** an axial guide length (F), between a tool-side guide end (13) with the guide diameter (D) and the end shoulder (12) of both catch grooves (5a, 5b), is shorter than 1.5 times the guide diameter (D).

3. Shank in accordance with one of claims 1 or 2, **characterized in that** the tangential-force contact face (7) at least runs over the contact length (K) both parallel to and vertically in relation to the axis (A).

4. Shank in accordance with one of the preceding claims, **characterized in that**, at least over the contact length (K), a radial groove depth (T) of each rotary lock-in groove (6a, 6b, 6c) is between 0.5 and 1 times the groove width (B).

5. Shank in accordance with one of the preceding claims, **characterized in that** there are at least three rotary lock-in grooves (6a, 6b, 6c) that can optionally be in a mirror symmetrical arrangement.

6. Shank in accordance with one of the preceding claims, **characterized in that** the end shoulder (12) that projects axially, on the tool-side, in relation to the given catch shoulder (11) of the two catch grooves (5a, 5b), is in each case formed by a further catch groove (5c, 5d) that is axially separated, on the tool-side, from the two catch grooves (5a, 5b).

7. Shank in accordance with claim 6, **characterized in that** the catch grooves (5a, 5b) and the further catch grooves (5c, 5d) have the same cross-section.

## Revendications

1. Extrémité d'insertion d'un outil (2) qui est entraîné en rotation et/ou en percussion au moins partiellement le long d'un axe (A) et qui, le long de l'axe (A), s'étend à l'intérieur d'un diamètre de guidage maximal (D) et comporte au moins deux gorges de verrouillage opposées (5a, 5b), lesquelles sont pourvues, à une extrémité axiale de verrouillage (3), d'un épaulement de verrouillage (11) orienté à l'opposé de l'extrémité frontale libre (4) et comportent chacune un épaulement extrême (12) projeté axialement côté outil par rapport à l'épaulement de verrouillage correspondant (11) et, avec un décalage tangentiel alterné par rapport aux gorges de verrouillage (5a, 5b), au moins deux rainures d'entraînement en rotation (6a, 6b) qui sont ouvertes vers l'extrémité frontale libre (4) et qui possèdent une largeur de rainure tangentielle (B) et au moins une surface de contact de force tangentielle (7) s'étendant sur une longueur de contact (K), l'épaulement extrême (12) précédant côté outil l'extrémité axiale de verrouillage (3) d'une longueur (L) au moins égale au triple du diamètre de guidage (D), **caractérisée en ce que** l'épaulement extrême (12) est décalé axialement côté outil d'au moins 1,5 fois le diamètre de guidage (D) par rapport à une extrémité côté outil (14) des rainures d'entraînement en rotation (6a, 6b).

2. Extrémité d'insertion selon la revendication 1, **caractérisée en ce qu'**une longueur axiale de guidage (F) entre une extrémité de guidage côté outil (13) possédant le diamètre de guidage (D) et l'épaulement extrême (12) des deux gorges de verrouillage (5a, 5b) est inférieure à 1,5 fois le diamètre de guidage (D).

3. Extrémité d'insertion selon une des revendications 1 ou 2, **caractérisée en ce que** la surface de contact de force tangentielle (7) s'étend au moins sur la longueur de contact (K) ainsi que parallèlement et perpendiculairement à l'axe (A).

4. Extrémité d'insertion selon une des revendications précédentes, **caractérisée en ce qu'**au moins sur la longueur de contact (K) une profondeur radiale de rainure (T) de chaque rainure d'entraînement en rotation (6a, 6b, 6c) est comprise entre 0,5 et 1 fois la largeur de rainure (B).

5. Extrémité d'insertion selon une des revendications précédentes, **caractérisée en ce qu'**il est prévu au moins trois rainures d'entraînement en rotation (6a, 6b, 6c) qui, optionnellement, sont disposées selon une symétrie en miroir.

6. Extrémité d'insertion selon une des revendications précédentes, **caractérisée en ce que** l'épaulement extrême (12) projeté axialement côté outil par rapport à l'épaulement de verrouillage correspondant (11) des deux gorges de verrouillage (5a, 5b) est formé à chaque fois par une gorge de verrouillage supplémentaire (5c, 5d) distante axialement côté outil des deux gorges de verrouillage (5a, 5b) et séparée de celles-ci.

7. Extrémité d'insertion selon la revendication 6, **caractérisée en ce que** les gorges de verrouillage (5a, 5b) et les gorges de verrouillage supplémentaires (5c, 5d) possèdent une section transversale identique.
